(19) Europäisches Patentamt
European Patent Office
Office européen des brevets

(11) **EP 2 082 290 B1**

(12) **FASCICULE DE BREVET EUROPEEN**

(45) Date de publication et mention de la délivrance du brevet:
**31.03.2010 Bulletin 2010/13**

(51) Int Cl.:
***G04B 5/02*** *(2006.01)*  ***G02B 5/18*** *(2006.01)*
***G02B 27/00*** *(2006.01)*  ***G02B 27/09*** *(2006.01)*

(21) Numéro de dépôt: **07820893.1**

(22) Date de dépôt: **03.10.2007**

(86) Numéro de dépôt international:
**PCT/EP2007/060516**

(87) Numéro de publication internationale:
**WO 2008/040767 (10.04.2008 Gazette 2008/15)**

(54) **PROCEDE D'AJUSTEMENT DE LA COMPENSATION DE RETARD PUPILLAIRE D'UN FAISCEAU CONVERGENT OU DIVERGENT**

VERFAHREN ZUR EINSTELLUNG DER PUPILLENVERZÖGERUNGSKOMPENSATION EINES KONVERGENTEN ODER DIVERGENTEN STRAHLS

METHOD FOR ADJUSTING THE PUPILLARY DELAY COMPENSATION OF A CONVERGENT OR DIVERGENT BEAM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.10.2006 FR 0654106**

(43) Date de publication de la demande:
**29.07.2009 Bulletin 2009/31**

(73) Titulaire: **Commissariat à l'Energie Atomique**
**75015 Paris (FR)**

(72) Inventeurs:
• **ROUYER, Claude**
**F-33610 Cestas (FR)**
• **NEAUPORT, Jérôme**
**F-33800 Bordeaux (FR)**
• **BLANCHOT, Nathalie**
**F-33600 Pessac (FR)**
• **SAUTERET, Jacques**
**F-75012 Paris (FR)**

(74) Mandataire: **Ilgart, Jean-Christophe**
**Brevalex**
**3, rue du Docteur Lancereaux**
**75008 Paris (FR)**

(56) Documents cités:
**FR-A- 2 723 216      JP-A- 2004 205 652**
**US-A- 5 264 912      US-A- 5 415 727**
**US-A- 5 493 441      US-A- 5 548 439**
**US-A- 6 049 434      US-A1- 2005 018 293**

• **DATABASE INSPEC [Online] THE INSTITUTION OF ELECTRICAL ENGINEERS, STEVENAGE, GB; Inspec No. Publication date Octobre 1997 1 octobre 1997 (1997-10-01), GONZALEZ INCHAUSPE C M ET AL: "Aberration compensation of a curved diffraction grating stretcher for femtosecond chirped-pulse amplification" XP002413030 Database accession no. 5726609 -& Journal of the Optical Society of America B (Optical Physics) Opt. Soc. America USA, vol. 14, no. 10, 1 octobre 1997 (1997-10-01), pages 2696-2700, XP002415049 ISSN: 0740-3224**

**Description**

**DOMAINE TECHNIQUE**

L'invention a trait à un procédé permettant d'ajuster la compensation du retard pupillaire ayant lieu lors de la propagation d'impulsions lumineuses brèves, en particulier dans des appareils laser.

**ÉTAT DE LA TECHNIQUE ANTÉRIEURE**

L'amplification d'une impulsion brève dans une chaîne laser provoque différentes distorsions du paquet d'ondes. On s'intéresse ici aux distorsions particulières associées à l'utilisation de lentilles pour la propagation du faisceau laser. En effet, les lentilles sont des composants optiques couramment utilisées dans une chaîne laser, par exemple pour augmenter la taille du faisceau, pour filtrer les fréquences spatiales indésirables et pour transporter l'image d'un plan. Dans la plupart des cas, on utilise des systèmes afocaux constitués de deux lentilles.

Une difficulté supplémentaire apparaît lorsque le diamètre du faisceau laser devient important. Dans ce cas, les différences d'épaisseur de verre constatées du centre au bord d'une lentille créent une distorsion particulière liée à un terme de retard de propagation entre le rayon central et les rayons de la périphérie du faisceau. Cette distorsion a pour principal effet de retarder l'énergie lumineuse du centre du paquet d'ondes par rapport à l'énergie de la périphérie.

Dans les chaînes dites femtosecondes de forte énergie, ce retard est souvent du même ordre de grandeur que la durée de l'impulsion. On précise qu'une chaîne femtoseconde délivre des impulsions lumineuses de quelques dizaines de femtosecondes (1 fs = $10^{-15}$s) et une énergie de quelques joules (pour les lasers de cent Térawatts) à quelques dizaines de joules (pour les lasers Pétawatt). Le problème des chaînes femtosecondes est qu'à cause du retard, la cible matérielle qui reçoit au final l'énergie du paquet d'ondes focalisé en fin de chaîne est éclairée durant un temps supérieur à la durée de l'impulsion. En conséquence, le chauffage instantané de la cible est rapidement moins efficace et l'intensité crête du confinement, exprimée en watts par $cm^2$ n'est plus optimisée. Il est donc important de pouvoir corriger le retard apparaissant dans ces chaînes laser afin d'obtenir des impulsions brèves à forte énergie ayant le minimum de défauts.

C'est en 1988 que furent calculés pour la première fois, par Bor (document [1]), les effets spatio-temporels créés par l'utilisation de lentilles. Ces effets se décomposent en un terme de dispersion de vitesse de groupe et un terme de retard de propagation (retard pupillaire). Les distorsions induites sur l'impulsion lumineuse par le retard pupillaire sont prépondérantes non seulement dans les chaînes lasers, mais aussi dans les systèmes de microscopie dans lesquels des optiques de forte ouverture sont nécessaires, et dans l'instrumentation de caractérisation des lasers ultra-brefs (tels que les autocorrélateurs et les spiders utilisant des lentilles). Bor démontra que l'effet du retard pupillaire sur l'élargissement temporel de l'impulsion pouvait être deux à trois fois plus grand que l'élargissement temporel induit par la dispersion des vitesses de groupe.

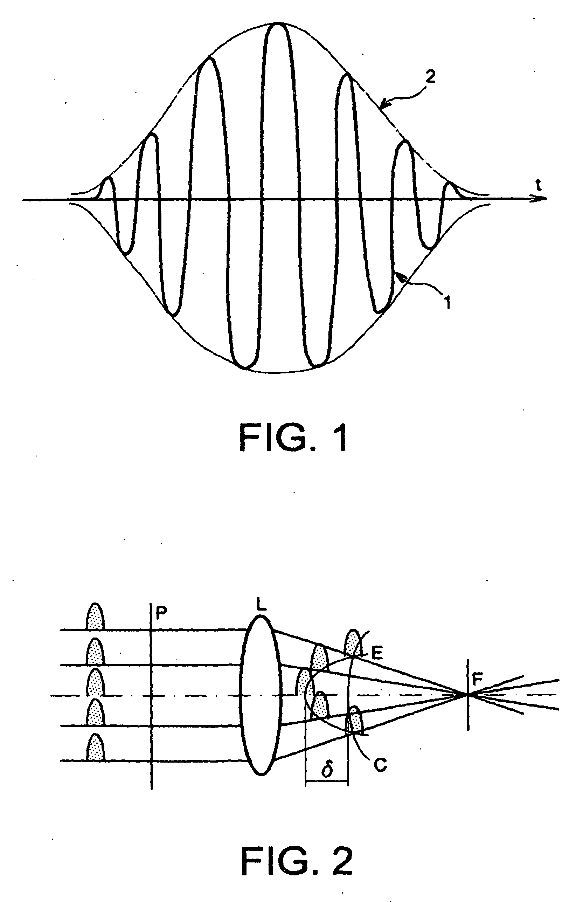

Une impulsion lumineuse peut être décrite comme étant un paquet d'ondes constitué d'une porteuse 1, qui oscille à la fréquence de l'onde, multipliée par une fonction enveloppe 2. Une impulsion lumineuse est illustrée sur la figure 1.

La porteuse et l'enveloppe ne se propagent pas à la même vitesse dans un milieu optique. En effet, la porteuse se déplace à la vitesse de phase $v_\varphi$ de l'onde et l'enveloppe se déplace à la vitesse de groupe $v_g$. Nous avons ainsi, dans un milieu dispersif d'indice n, les relations suivantes :

$$v_\varphi \ = \ \lambda . \nu = \ c/n_0$$

et

$$v_g \ = \ v_\varphi \ - \ \lambda . (dv_\varphi/d\lambda)_\lambda$$

où $\lambda$ est la longueur d'onde moyenne dans le milieu, $\nu$ la fréquence de l'onde, c la vitesse de la lumière dans le vide et $n_0$ l'indice à la longueur d'onde moyenne $\lambda_0$ dans le vide ($\lambda = \lambda_0/n_0$).

A noter que $1/v_g$ peut s'écrire en fonction des paramètres du milieu et de la longueur d'onde moyenne $\lambda_0$ :

$$1/v_g = n_0/c - n_\lambda . \lambda_0/c$$

où

$$n_\lambda = (dn/d\lambda)\lambda_0$$

Le faisceau propageant l'impulsion incidente est représenté sur la figure 2 par cinq rayons lumineux. Le faisceau lumineux traverse ici une lentille convergente et les cinq rayons incidents convergent au foyer F de la lentille.

Comme la lentille est convergente, les deux rayons périphériques traversent une faible épaisseur de verre et atteignent les premiers le foyer F. Le rayon central, qui traverse la plus grande épaisseur de verre, arrive au foyer F avec un retard $\delta$. Les deux rayons moyens arrivent au foyer avec un retard intermédiaire.

Nous observons que le front de phase est représenté en amont de la lentille par le plan P et en aval par l'arc de cercle C, dont le centre est situé au niveau du foyer F. La phase de l'onde est donc véhiculée jusqu'au foyer F de la lentille sans déformation, alors que l'énergie transportée par l'impulsion, représentée par l'arc de cercle E, présente une distorsion sensible par rapport au front de phase.

Nous noterons que pour une lentille divergente, le retard $\delta$ serait inversé et le rayon central serait cette fois-ci en avance par rapport aux autres rayons.

Le retard pupillaire $\delta$ se calcule à partir de la formule suivante :

$$\delta = \beta . T . (h^2/2f)$$

Nous allons expliquer comment cette formule est obtenue.

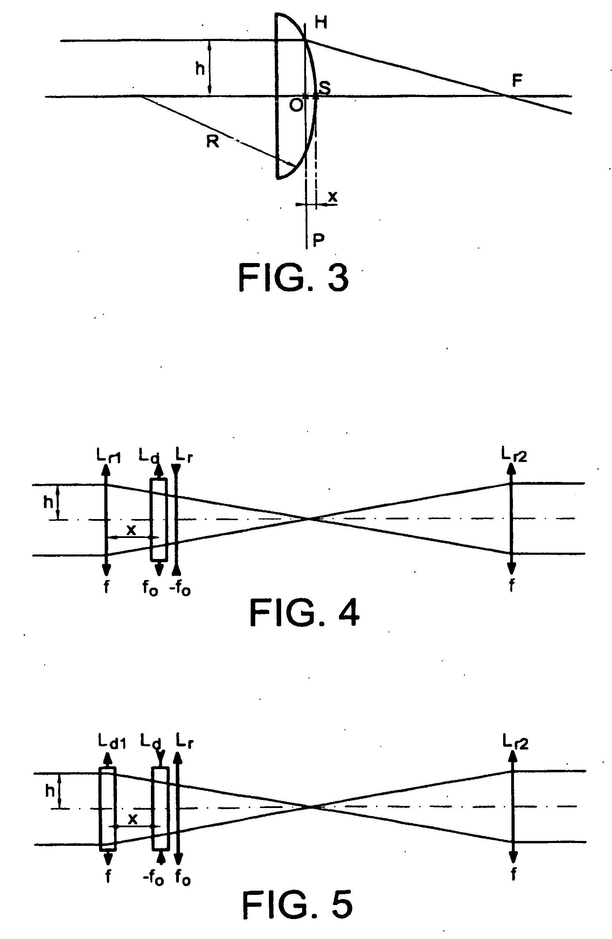

Pour cela et afin d'éviter des calculs compliqués, la figure 3 présente une lentille plan-convexe mince dont l'orientation par rapport au faisceau est choisie uniquement pour clarifier la présentation. Dans cette figure, R est le rayon de courbure de la face convexe de la lentille et $n_0$ représente l'indice du milieu à la longueur d'onde lumineuse moyenne.

Selon le principe de Fermat, le chemin optique effectivement suivi par la lumière entre deux points est stationnaire. Cela signifie que tous les trajets optiques des rayons partant du plan équi-phase P et allant au foyer F sont identiques. Nous avons donc nécessairement:

$$HF = OS + SF$$
$$= n_0 . x + SF$$
$$= n_0 . x + f$$

où f représente la distance focale de la lentille.

Pour cette lentille mince, nous avons les relations suivantes :

$$R = (n_0 - 1) . f$$

et

$$x = h^2/2R$$

Le retard pupillaire entre les rayons périphériques et le rayon central est donc le suivant :

$$\delta \quad = \quad (HF-f)/c \; - \; (x/v_g)$$

$$= \quad (n_0.x/c) \; - \; x.(n_0/c \; - \; n_\lambda.\lambda_0/c)$$

$$= \quad (n_\lambda/(n_0-1)). \; \lambda_0.h^2/2c.f$$

En posant $\beta = n_\lambda/(n_0-1)$ (terme dispersif) et $T = \lambda_0/c$ (période de l'onde), l'expression de $\delta$ est alors :

$$\delta \; = \; \beta.T.(h^2/2f)$$

On peut remarquer que le retard pupillaire $\delta$ possède une symétrie axiale. En effet, tous les rayons périphériques se propageant sur une ouverture de rayon h possèdent le même retard $\delta$ par rapport au rayon central.

Dans une lentille convergente, le retard pupillaire $\delta$ est négatif grâce au terme de dispersion $\beta$. Le retard $\delta$ dans une lentille convergente est alors une avance temporelle.

Inversement, le retard pupillaire $\delta$ sera positif dans une lentille divergente et les rayons périphériques possèderont un réel retard par rapport au rayon central.

Nous noterons que le retard temporel $\delta_T$ total d'une chaîne est la somme de tous les retards algébriques des lentilles présentes. Ainsi par exemple, pour un système afocal de grandissement axial de -1 constitué de deux lentilles minces, convergentes et identiques, de focale f, le retard pupillaire est de $2\delta$, soit $\beta.T.h^2/f$.

Les lentilles minces (convergentes ou divergentes) sont généralement réalisées dans un matériau tel que le verre ou la silice. C'est pourquoi les lentilles minces sont également appelées lentilles réfractives. C'est pour cette raison que le retard pupillaire et le terme dispersif des lentilles réfractives sont repérés ci-dessous par l'indice r ($\delta_r$ et $\beta_r$).

Ainsi, pour une lentille mince en verre BK7 conventionnel d'indice $n_0 = 1,5068$, nous avons, à la longueur d'onde de 1053 nm (la période T d'une onde à 1053 nm étant de 3,5 fs), $n_\lambda = -1,33.10^{-5}$ nm$^{-1}$ et $\beta_r = -262$ cm$^{-1}$.

Pour une lentille mince en silice d'indice $n_0 = 1,45$, utilisée à la même longueur d'onde, nous avons $n_\lambda = -1,22.10^{-5}$ nm$^{-1}$ et $\beta_r = -271$ cm$^{-1}$.

Les composants qui utilisent la diffraction d'un réseau pour assurer la convergence ou la divergence des faisceaux lumineux sont qualifiés de lentilles diffractives. Les lentilles diffractives sont par exemple réalisées en gravant une densité déterminée de traits sur la face d'un dioptre. Si cette gravure est réalisée sur une face d'une lame à faces planes et parallèles, le retard pupillaire et le terme dispersif de ces lentilles diffractives sont repérés par l'indice d et sont les suivants :

$$\delta_d \; = \; \beta_d.T.(h^2/2f) \; avec \; \beta_d \; = \; 1/\lambda_0$$

Nous constatons que le terme dispersif $\beta_d$ ne dépend que de la longueur d'onde et que son signe est inverse de celui d'une lentille réfractive.

Si cette gravure est réalisée sur l'une des faces d'une lentille réfractive alors le retard pupillaire s'écrira comme la somme des retards pupillaires des parties réfractives et diffractives respectivement. Nous montrerons par la suite que la contribution réfractive est en pratique négligeable et le retard pupillaire s'écrit comme précédemment.

Les chercheurs ont mis en oeuvre diverses solutions pour compenser le retard pupillaire. Ces solutions sont celles couramment mises en oeuvre pour la correction de chromatisme longitudinal, c'est-à-dire par exemple le remplacement des lentilles par des doublets achromatiques, l'insertion de réseau dont la dispersion est inverse de celle d'un élément réfractif...

Cependant, de récents travaux (document [2]) ont démontré que pour une utilisation dans un laser de puissance avec un fort retard à compenser (c'est-à-dire de quelques ps), seules les solutions diffractives sont viables. Les solutions pour compenser le retard pupillaire sont donc encore restreintes.

Le principal inconvénient des solutions actuelles est leur caractère statique. En effet, une fois que le retard à compenser a été évalué et que le système de correction a été dimensionné et implanté dans le système optique, la correction est figée. Ainsi, s'il reste un retard à compenser, qu'il soit dû à une imperfection de l'évaluation précédente ou de la fabrication de l'élément compensateur, ou qu'il soit dû à une modification du schéma optique du système optique à compenser (par exemple une chaîne laser), le retard résiduel ne peut être corrigé que par un changement du ou des éléments optiques de compensation.

Le but de l'invention consiste donc à fournir un procédé permettant d'ajuster la compensation pupillaire d'un faisceau convergent ou divergent.

**EXPOSÉ DE L'INVENTION**

Ce but et d'autres encore sont atteints, conformément à l'invention grâce à un procédé d'ajustement de la compensation de retard pupillaire d'un faisceau convergent ou divergent, comprenant les étapes consistant à :

- placer un dispositif composé d'un système afocal comprenant un ou plusieurs composants optiques passifs disposés sur l'axe de propagation dudit faisceau, au moins un desdits composants étant un composant diffractif focalisant,
- déplacer le dispositif selon l'axe de propagation du faisceau jusqu'à obtenir la compensation de retard pupillaire souhaitée, ladite compensation étant la somme algébrique des retards pupillaires de chaque composant optique passif du système afocal et étant comprise dans une gamme de valeurs dont les bornes sont fonctions de la combinaison particulière des composants optiques choisis pour former le système afocal du dispositif de compensation.

Selon un mode de réalisation, le système afocal est composé d'un ensemble de lentilles, au moins une des lentilles étant diffractive, le système afocal présentant un grandissement de $\pm 1$.

Avantageusement, le composant diffractif focalisant est un composant diffractif de phase ou un composant diffractif de volume.

Avantageusement, le composant diffractif focalisant est choisi parmi une lentille diffractive, une lentille de Fresnel diffractive, un réseau de diffraction ou similaires.

Avantageusement, les composants optiques passifs sont des lentilles et sont choisis de telle sorte que :

- le système est afocal et présente un grandissement de $\pm 1$ et
- au moins une des lentilles est diffractive.

Avantageusement, le système afocal est constitué de deux lentilles possédant la même valeur absolue de focale $f_0$, une lentille convergente et une lentille divergente, l'une des lentilles étant réfractive et l'autre lentille étant diffractive.

Le dispositif utilisé dans le procédé est un dispositif de compensation de retard pupillaire destiné à être inséré sur le chemin optique d'un faisceau convergent ou divergent dans une position réglable sur l'axe de propagation dudit faisceau de manière à ajuster la compensation d'un retard pupillaire de symétrie axiale dudit faisceau. Le dispositif est composé d'un système afocal comprenant un ou plusieurs composants optiques passifs disposés sur l'axe de propagation du faisceau, au moins un desdits composants étant un composant diffractif focalisant.

On entend par « système afocal » un système qui, éclairé par un faisceau de rayons parallèles, délivre un autre faisceau de rayons parallèles.

On appelle « grandissement » le rapport algébrique du diamètre du faisceau de rayons parallèles de sortie sur celui du diamètre du faisceau de rayons parallèles d'entrée.

Les dispositifs de compensation utilisés au cours du procédé selon l'invention peuvent être insérés sur tout type de faisceau convergent ou divergent, dans une position réglable sur l'axe de propagation pour ajuster une parfaite compensation du retard pupillaire de symétrie axiale. Le procédé selon l'invention peut ainsi être utilisé pour ajuster un faisceau dans une chaîne laser.

Le procédé selon l'invention apporte une solution simple et originale pour fournir un retard ajustable du paquet d'ondes afin de compenser le retard qui apparaît entre le rayon central et les rayons périphériques lors de la propagation d'une impulsion brève dans une chaîne femtoseconde contenant des lentilles.

Cette compensation optimise le confinement du champ électromagnétique sur la cible. On notera que ce retard, de symétrie axiale, varie comme le carré de la dimension spatiale transverse du paquet et peut également être vu comme étant un chromatisme longitudinal. On le qualifie dans cette description de « retard pupillaire ».

Le retard pupillaire intrinsèque du dispositif utilisé dans le procédé selon l'invention est égal à la somme algébrique des retards des composants optiques constituant le système afocal du dispositif. Si le système afocal du dispositif ne comporte qu'un seul composant optique, il s'agira dans ce cas d'une lentille diffractive de puissance nulle et le retard pupillaire du dispositif sera égal au retard pupillaire de la face diffractive de la lentille, auquel s'ajoute le retard pupillaire de la lentille réfractive sur lequel la fonction diffractive est réalisée. Si le système afocal comporte plusieurs composants optiques, le retard pupillaire sera la somme des retards pupillaires desdits composants optiques, au moins un des composants étant diffractif.

L'avantage du dispositif utilisé dans le procédé selon l'invention est qu'il permet de corriger de façon ajustable le retard pupillaire axial, et donc le chromatisme axial, d'un montage optique par le seul ajustement de la position dudit dispositif dans le montage. Ce dispositif peut s'introduire dans toute installation optique où le retard pupillaire constitue la baisse principale de performance. Il peut compenser tout type de retard avec une excellente précision.

**BRÈVE DESCRIPTION DES DESSINS**

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 représente une impulsion lumineuse,
- la figure 2 illustre le retard pupillaire subi par une impulsion lumineuse après son passage à travers une lentille,
- la figure 3 illustre la différence de distance parcourue par un faisceau central et par un faisceau périphérique à travers une lentille plan-convexe mince,
- la figure 4 représente un premier montage incluant le dispositif d'ajustement selon l'invention,
- la figure 5 représente un second montage incluant le dispositif d'ajustement selon l'invention.

**EXPOSÉ DÉTAILLÉ DE MODES DE RÉALISATION PARTICULIERS**

Dans le cas d'un dispositif de compensation constitué d'une lentille diffractive convergente $L_d$ de focale $+f_0$ et d'une lentille réfractive divergente $L_r$ de focale $-f_0$, le retard pupillaire intrinsèque est $\delta_0$ tel que :

$$\delta_0 = \beta_d.T.(h^2/2f_0) + \beta_r.T.(h^2/2f_0)$$
$$\cong \beta_d.T.(h^2/2f_0)$$

Dans ce mode de réalisation, nous ne prenons en compte que le retard pupillaire intrinsèque $\delta(x)$ calculés pour une ouverture $h(x)$ et induit par la lentille diffractive $L_d$ du dispositif d'ajustement. En effet, le rapport $\beta_d/\beta_r$ entre le terme dispersif d'une lentille diffractive et d'une lentille réfractive est de l'ordre de $\pm 35$. Ainsi, pour une ouverture donnée, lorsque les deux types de lentilles sont présents, on peut négliger le retard pupillaire d'une lentille réfractive devant celui d'une lentille diffractive.

Le déplacement du dispositif de compensation dans le faisceau, qu'il soit convergent comme divergent, modifie la hauteur h et donc le retard pupillaire intrinsèque du dispositif. Le pouvoir compensateur du dispositif est donc ajustable. Par exemple, à 1053 nm, pour une ouverture numérique de focale $f_0/5$ ($f_0$ est 5 fois plus grande que le diamètre 2h du faisceau laser), exprimé en fs, est de l'ordre de $+166.f_0$ (où $f_0$ est exprimée en cm). Ainsi, pour une focale $f_0$ de 20 cm, $\delta_0$ est de +3,32 ps. Le retard est ici capable de compenser une avance globale apportée par les lentilles réfractives de la chaîne de 3,32 ps.

Nous allons à présent donner quelques exemples non limitatifs de montages optiques dans lesquels le dispositif d'ajustement selon l'invention est inséré.

Le premier montage est un système afocal de grandissement axial +1 et est représenté dans la figure 4. Il comprend deux lentilles convergentes et réfractives $L_{r1}$ et $L_{r2}$ de même longueur focale f et distantes de 2f, et un dispositif d'ajustement du retard constitué d'une lentille convergente diffractive $L_d$ et d'une lentille divergente réfractive $L_r$. Le dispositif d'ajustement est inséré entre les lentilles $L_{r1}$ et $L_{r2}$.

Le dispositif d'ajustement est disposé à une distance x de la lentille $L_{r1}$. Cette distance x est le paramètre d'ajustement.

Le retard pupillaire intrinsèque du dispositif est égal à la somme algébrique des retards du ou des composants constituant le système afocal de puissance optique nulle. Dans ce mode de réalisation, nous ne prenons en compte que le retard pupillaire intrinsèque $\delta(x)$ calculés pour une ouverture $h(x)$ et induit par la lentille diffractive. $L_d$ du dispositif d'ajustement. En effet, comme nous l'avons vu précédemment, on peut négliger le retard pupillaire d'une lentille réfractive devant celui d'une lentille diffractive.

$$\delta_0 = \beta_d.T.(h^2/2f_o)$$

et

$$\delta(x) = \beta_d . T . (h^2(x)/2f_0)$$

avec

$$h(x) = h . [1-(x/f)]$$

Le retard calculé $\delta(x)$ pour la position x s'exprime alors par :

$$\delta(x) = \delta_0 . (1-x/f)^2$$

La distance x est le paramètre d'ajustement.

Le retard pouvant être corrigé par le dispositif selon l'invention est encadré par deux valeurs extrêmes :

$$\delta_0 . (1-x_{max}/f)^2 \leq \delta (x) \leq \delta_0$$

Admettons que la valeur maximum de x, notée $x_{max}$, soit f/4 (pour des raisons de flux). Dans ces conditions, $\delta(x)$ varie entre :

$$(9/16) . \delta_0 \leq \delta(x) \leq \delta_0$$

Ainsi, pour une ouverture numérique de $f_0/5$ et une focale $f_0$ de 20 cm, $\delta_0$ est 3,32 ps.

A l'aide de ce dispositif, le retard minimum compensable est de 1,87 ps (x=f/4) et le retard maximum est de 3,32 ps (x=0 cm).

La compensation de retard pupillaire est alors ajustable sur une gamme dont les bornes sont dans un rapport proche de deux.

Afin d'augmenter ce rapport et/ou de pouvoir placer ces bornes de part et d'autre d'un retard pupillaire nul, un second exemple représentatif non limitatif d'application du dispositif d'ajustement selon l'invention est présenté dans la figure 5.

Le dispositif de compensation ajustable est ici inséré dans un système afocal de grandissement axial +1.

Le système afocal est constitué de deux lentilles convergentes de même longueur focale f et distantes de 2f, la première lentille $L_{d1}$ étant diffractive et la seconde lentille $L_{r2}$ étant réfractive.

Le dispositif de compensation ajustable est ici constitué d'une association d'une lentille divergente diffractive $L_d$ de focale $-f_0$ et d'une lentille convergente réfractive $L_r$ de focale $+f_0$. Le retard pupillaire intrinsèque du système de compensation est alors :

$$\delta_0 = \beta_d . T . (-h^2/2f_0) + \beta_r . T . (h^2/2f_0)$$
$$\cong - \beta_d . T . (h^2/2f_0)$$

Nous ne prenons en compte que les retards pupillaires intrinsèques $\delta_1$ et $\delta_0$ induits par les lentilles diffractives $L_{d1}$ et $L_d$, calculés pour une ouverture h.

$$\delta_0 = - \beta_d . T . (h^2/2f_o)$$

et

$$\delta_1 = \beta_d . T . (h^2/2f) = - \delta_0 . (f_o/f)$$

Le retard calculé pour la position x s'exprime par :

$$\delta(x) \;=\; \delta_1 \;+\; \delta_0.(1-x/f)^2$$

Le retard $\delta(x)$ apporté par le système est encadré par deux valeurs extrême :

$$\delta_1 \;+\; \delta_0 \;\leq\; \delta(x) \;\leq\; \delta_1 \;+\; \delta_0.(1-x_{max}/f)^2$$

ou encore

$$\delta_0 \;[1 \,-\, (f_0/f)] \;\leq\; \delta(x) \;\leq\; \delta_0.[(1 \,-\, x_{max}/f)^2 - (f_0/f)]$$

Ainsi, si l'on a une valeur de $f_0$ égale, par exemple, à 0,95f et une valeur maximale de x de f/4 (pour des raisons de flux), alors $\delta(x)$ varie entre :

$$0,05.\delta_0 \;\leq\; \delta(x) \;\leq\; -0,39.\delta_0$$

Pour une ouverture numérique de $f_0/5$ et une focale $f_0$ de 100 cm, $\delta_0$ est égale à -16,7 ps.
Le retard minimum compensable est alors de -0,835 ps (pour x= 0 cm) et le retard maximum est de 6,5 ps (pour x= 25 cm).

$$-0,835 \text{ ps} \;\leq\; \delta(x) \;\leq\; +6,5 \text{ ps}$$

Nous noterons que les besoins de correction de retard pupillaire se situent couramment entre un minimum de 10 à 100 fs jusqu'à un maximum de plusieurs ps. Selon les composants optiques choisis pour constituer le système afocal (par exemple choix d'une lentille de Fresnel diffractive de phase ou d'amplitude comprenant une face diffractive, une lentille divergente/convergente et diffractive/réfractive, un réseau de diffraction de phase ou d'amplitude...), on peut très aisément adapter le dispositif d'ajustement à tout type de retard ou d'avance pupillaire, comme nous l'avons démontrer dans les deux exemples précédents de modes de réalisation.
Les exemples ci-dessus de dispositifs de compensation comprenaient un système afocal constitué de deux lentilles. Mais on peut également obtenir des dispositifs comprenant un seul composant diffractif ou plus de deux composants optiques avec au moins un des composants qui est diffractif. On peut ainsi avoir toutes sortes de combinaisons de composants optiques, par exemple un unique composant de puissance nulle comprenant une face diffractive et une face réfractive telle qu'une lentille de Fresnel diffractive, ou une combinaison de 3 lentilles ou plus.
Il est à noter que les composants optiques constituant le système afocal sont des composants passifs, c'est-à-dire qu'ils ne nécessitent pas d'énergie pour fonctionner.
Les composants diffractifs peuvent être choisis parmi les lentilles de Fresnel diffractives, les réseaux holographiques, les réseaux de phase... Le choix du composant diffractif adéquate se fait en recherchant celui qui offre le bon compromis entre la meilleure compensation du retard pupillaire et la meilleure efficacité énergétique.
Des miroirs courbes ou des composants de forme parabolique peuvent également être utilisés comme composants optiques, en plus des composants optiques diffractifs.
Le dispositif d'ajustement selon l'invention est destiné à compenser le retard pupillaire dans les installations de lasers impulsionnels de haute énergie du type de celles installées en France (LIL et LMJ du CEA, PETAL, Pico2000 (version kJ-PW) au Laboratoire pour l'Utilisation des Lasers Intenses de l'Ecole Polytechnique) et aux Etats-Unis (Programme NIF) et dans la plupart des Pays qui s'intéressent à la physique de la matière, aux plasmas denses et à la fusion thermonucléaire.
Le dispositif selon l'invention est également utilisable par les lasers commerciaux à impulsions courtes, c'est-à-dire inférieures à la picoseconde.

Il peut aussi répondre à des besoins spécifiques où les impulsions lasers brèves ou ultra-brèves sont utilisées avec des optiques très ouvertes, comme en microscopie ou dans les instrumentations d'ophtalmologie et de génie biophysique et médical.

D'une façon générale, le dispositif est utilisable dans tout système de propagation d'ondes électromagnétiques (tout spectre confondu) qui présente intrinsèquement un retard pupillaire axial et donc un chromatisme axial.

**BIBLIOGRAPHIE**

[1] Z. Bor, Distorsion of femtosecond laser pulses in lenses, Optics Letters, vol. 14, N° 2, 1989, pp 119-121.

[2] N. Blanchot, J, Neauport, C. Rouyer et C. Sauteret, correction du chromatisme de la chaîne PETAL, juillet 2006.

**Revendications**

1. Procédé d'ajustement de la compensation de retard pupillaire d'un faisceau convergent ou divergent, comprenant les étapes consistant à :

   afocal comprenant un ou plusieurs composants optiques passifs $(L_{r1})$, $(L_{r2})$, $(L_d)$, $(L_r)$, $(L_{d1})$ disposés sur l'axe de propagation dudit faisceau, au moins un desdits composants étant un composant diffractif focalisant $(L_{d1})$, $(L_d)$,
   - déplacer le dispositif selon l'axe de propagation du faisceau jusqu'à obtenir la compensation de retard pupillaire souhaitée, ladite compensation étant la somme algébrique des retards pupillaires de chaque composant optique passif du système afocal et étant comprise dans une gamme de valeurs dont les bornes sont fonctions de la combinaison particulière des composants optiques choisis pour former le système afocal du dispositif de compensation.

2. Procédé d'ajustement de la compensation de retard pupillaire selon la revendication 1, dans lequel le système afocal est composé d'un ensemble de lentilles $(L_{r1})$, $(L_{r2})$, $(L_d)$, $(L_r)$, $(L_{d1})$, au moins une des lentilles étant diffractive $(L_d)$, $(L_{d1})$, le système afocal présentant un grandissement de $\pm 1$.

3. Procédé d'ajustement de la compensation de retard pupillaire selon la revendication 1, dans lequel le composant diffractif focalisant $(L_d)$, $(L_{d1})$ est un composant diffractif de phase ou un composant diffractif de volume.

4. Procédé d'ajustement de la compensation de retard pupillaire selon la revendication 3, dans lequel le composant diffractif focalisant $(L_d)$, $(L_{d1})$ est choisi parmi une lentille diffractive, une lentille de Fresnel diffractive, un réseau de diffraction ou similaires.

5. Procédé d'ajustement de la compensation de retard pupillaire selon la revendication 1, dans lequel les composants optiques passifs sont des lentilles et sont choisis de telle sorte que :

   - le système est afocal et présente un grandissement de $\pm 1$ et
   - au moins une des lentilles est diffractive.

6. Procédé d'ajustement de la compensation de retard pupillaire selon la revendication 5, dans lequel le système afocal est constitué de deux lentilles possédant la même valeur absolue de focale $f_0$, une lentille convergente et une lentille divergente, l'une des lentilles étant réfractive et l'autre lentille étant diffractive.

**Claims**

1. Method of adjusting the pupil delay compensation of a convergent or divergent beam, comprising the steps consisting of:

   - placing a device composed of an afocal system comprising one or more passive optical components $(L_{r1})$, $(L_{r2})$, $(L_d)$, $(L_r)$, $(L_{d1})$ disposed on the propagation axis of said beam, at least one of said components being a focusing diffractive component $(L_d)$, $(L_{d1})$,

- moving the device along the propagation axis of the beam until the required pupil delay compensation is obtained, said compensation being the algebraic sum of the pupil delays of each passive optical component of the afocal system and lying in a range of values the limits of which are functions of the particular combination of the optical components chosen to form the afocal system of the compensation device.

2. Method of adjusting pupil delay compensation according to claim 1, in which the afocal system is composed of a set of lenses $(L_{r1})$, $(L_{r2})$, $(L_d)$, $(L_r)$, $(L_{d1})$, at least one of the lenses being diffractive $(L_d)$, $(L_{d1})$, the afocal system having a magnification of $\pm 1$.

3. Method of adjusting pupil delay compensation according to claim 1, in which the focusing diffractive component $(L_d)$, $(L_{d1})$ is a phase diffractive component or a volume diffractive component.

4. Method of adjusting pupil delay compensation according to claim 3, in which the focusing diffractive component $(L_d)$, $(L_{d1})$ is chosen from a diffractive lens, a diffractive Fresnel lens, a diffraction grating or the like.

5. Method of adjusting pupil delay compensation according to claim 1, in which the passive optical components are lenses and are chosen so that:

   - the system is afocal and has a magnification of $\pm 1$, and
   - at least one of the lenses is diffractive.

6. Method of adjusting pupil delay compensation according to claim 5, in which the afocal system consists of two lenses having the same absolute focal-length value $f_0$, a convergent lens and a divergent lens, one of the lenses being refractive and the other lens being diffractive.


**Patentansprüche**

1. Verfahren zur Anpassung des Ausgleichs der pupillaren Verzögerung eines konvergierenden oder divergierenden Strahls, das folgende Schritte umfasst:

   - Setzen einer Vorrichtung, die aus einem afokalen System $(Lr_1)$, $(Lr_2)$, $(L_d)$, $(L_r)$, $(L_{d1})$ besteht, das eine oder mehrere passive optische Komponenten aufweist, die auf der Achse der Ausbreitung des Strahls angeordnet sind, wobei mindestens eine der genannten Komponenten eine fokussierende diffraktive Komponente $(L_d)$, $(L_{d1})$ ist,
   - Bewegen der Vorrichtung entlang der Achse der Ausbreitung des Strahls, bis der gewünschte Ausgleich der pupillaren Verzögerung erreicht wird, wobei der besagte Ausgleich aus der algebraischen Summe der pupillaren Verzögerungen jeder passiven optischen Komponente des afokalen Systems besteht und in einem Bereich von Werten enthalten ist, dessen Grenzwerte Funktionen der besonderen Kombination der ausgewählten optischen Komponenten für die Bildung des afokalen Systems der Ausgleichsvorrichtung sind.

2. Verfahren zur Anpassung des Ausgleichs der pupillaren Verzögerung nach Anspruch 1, wobei das afokale System aus einem Satz von Linsen $(Lr_1)$, $(Lr_2)$, $(L_d)$, $(L_r)$, $(L_{d1})$ besteht, wobei mindestens eine der Linsen diffraktiv $(L_d)$, $(L_{d1})$ ist und das afokale System eine Vergrößerung von $\pm 1$ aufweist.

3. Verfahren zur Anpassung des Ausgleichs der pupillaren Verzögerung nach Anspruch 1, wobei die fokalisierende Beugungskomponente $(L_d)$, $(L_{d1})$ eine Phasenbeugungskampanente oder eine Volumenbeugungskomponente ist.

4. Verfahren zur Anpassung des Ausgleichs der pupillaren Verzögerung nach Anspruch 3, wobei die fokalisierende Beugungskomponente $(L_d)$, $(L_{d1})$ aus einer diffraktiven Linse, einer diffraktiven Fresnel-Linse, einem Beugungsgitter oder Ähnliches ausgewählt wird.

5. Verfahren zur Anpassung des Ausgleichs der pupillaren Verzögerung nach Anspruch 1, wobei die passiven optischen Komponenten Linsen sind und so gewählt sind, dass:

   - das System afokal ist und eine Vergrößerung von $\pm 1$ aufweist und
   - mindestens eine der Linsen diffraktiv ist.

**6.** Verfahren zur Anpassung des Ausgleichs der pupillaren Verzögerung nach Anspruch 5, wobei das afokale System aus zwei Linsen mit demselben absoluten Fokalwert fo, einer Sammellinse und einer Zerstreuungslinse besteht, wobei die eine Linse refraktiv ist und die andere Linse diffraktiv ist.

FIG. 1

FIG. 2

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Z. Bor.** Distorsion of femtosecond laser pulses in lenses. *Optics Letters,* 1989, vol. 14 (2), 119-121

- **N. Blanchot ; J, Neauport ; C. Rouyer ; C. Sauteret.** *correction du chromatisme de la chaîne PETAL,* Juillet 2006